# EUROPEAN PATENT APPLICATION

(11) **EP 1 924 097 A1**
(43) Date of publication of application: **21.05.2008**
(21) Application number: 06124054.5
(22) Date of filing: 14.11.2006
(51) Int. Cl.: H04N 7/26

(54) **Motion and scene change detection using color components**

(71) Applicant: SONY DEUTSCHLAND GMBH, 10785 Berlin (DE)
(72) Inventor: Lei, Zhichun, 70327, Stuttgart (DE); Siddiqui, Muhammad, 70327, Stuttgart (DE); Zimmermann, Klaus, 70327, Stuttgart (DE)
(74) Representative: Körber, Martin Hans

(57) **Abstract**

The present invention relates to the fields of motion detection, scene change detection and temporal domain noise reduction. Especially, the present invention relates to a device, a method and a software for detecting motion and/or scene change in a sequence of image frames. The device for detecting motion and/or scene change in a sequence of image frames comprises a difference generator adapted to calculate one or more differences between values of pixels of separate image frames, the pixel values comprising color information, and a discriminator for providing an indication whether the calculated one or more pixel value differences correspond to noise or correspond to image content based on the one or more pixel value differences.

## Description

### Field of the invention

The present invention relates to the fields of motion detection, scene change detection and temporal domain noise reduction. Especially, the present invention relates to a device, a method and a software for detecting motion and/or scene change in a sequence of image frames.

### Description of the related prior art

Temporal filters and spatio-temporal filters are widely employed to suppress noise in image sequences. Hereby, image frames are filtered in the temporal domain. In order to deal with motion or scene change, it is known to operate the temporal noise reduction filter in an adaptive way, so that the strength of the filtering operation can be temporarily reduced or even switched off, in case that motion or scene change is detected. The adaption is commonly based on luminance value differences between pixels, whereby the absolute values of these differences are compared to a threshold, and one decides the amount of filtering that is applied to each pixel of each frame. Alternatively, a look-up-table is provided which yields the amount of filtering for a given absolute pixel value difference.

Detection of scene change and motion however is unsatisfactory so that still perceptible motion artifacts are generated and the noise reduction is not as high as desired. The state-of-the-art technique encounters problems especially for low contrast images, such as, for example, low light images and for images with high noise levels (due to for example a high sensitivity of the image taking device, which can be encountered, for example, in high resolution digital but compact image taking devices), whereby the problems are aggravated under a combination of both adverse conditions.

The object of the present invention is therefore to specify a method, a device and a software product which provide for a better detection of motion and/or scene change in a sequence of image frames, especially for low contrast and/or high noise level image frame sequences.

### Summary of the invention

This object is solved by the device, the method and the software product for detecting motion and/or scene change in a sequence of image frames according to claims 1,13 and 24, respectively.

The device for detecting motion and/or scene change in a sequence of image frames according to the invention comprises a difference generator adapted to calculate pixel value differences between values of pixels of separate image frames, the pixel values comprising color information, and adapted to provide color difference values based on the calculated pixel value differences and a discriminator for providing an indication whether the calculated pixel value differences correspond to noise or correspond to image content based on the color difference values.

Favorably, the indication comprises at least one indication value which is chosen from on more than two ordered values, whereby a first extreme value has the meaning that a calculated pixel value difference is most likely due to noise, a second extreme value has the meaning that a calculated pixel value difference is most likely due to image content and the value or the values in between the extreme values have a meaning in between the meanings of the extreme values.

Favorably, the indication comprises at least one indication value which is chosen from more than two ordered values, whereby a relatively high value is chosen for a relatively high absolute value of a color difference value or a relatively low value is chosen for a for a relatively high value of a color difference value.

Favorably, the difference generator is adapted to calculate pixel value differences of a first kind between pixel values comprising a first kind of color information, calculate pixel value differences of a second kind between pixel values comprising a different, second kind of color information and calculate combined difference values, whereby a combined difference value is a scalar combination of a pixel value difference of the first kind and a pixel value difference of the second kind and whereby the color difference values are given by the combined difference values.

Favorably, the difference generator comprises a low-pass filter for filtering the pixel values. In this case it is advantageous when the low-pass filter is adapted to filter the pixel values in the spatial domain and the ratio between the cutoff frequency of the low-pass filter and the sampling rate of a video signal comprising the image frames is in the range 0.1 to 0.25.

Favorably, the pixel values correspond to values of coordinates of a perceptibly linear color space. In this case it is advantageous when the difference generator comprises a coordinate transformation device adapted to transform pixel value information from a representation in a first color space to a representation in a second color space.

Favorably, the discriminator is adapted to provide the indication based on the color constancy principle.

Favorably, the difference generator is adapted to calculate brightness difference values, the brightness difference values being differences between values of pixels of separate image frames, the pixel values comprising brightness information, wherein the discriminator is adapted to provide the indication based on the brightness information. In this case it is advantageous when the difference generator is adapted to weight the color difference values with corresponding brightness difference values, whereby the discriminator is adapted to provide the indication based on the weighted color difference values, or the difference generator is adapted to weight the brightness difference values with corresponding color difference values, whereby the discriminator is adapted to provide the indication based on the weighted brightness differences.

The invention can likewise be seen in a corresponding method to detect motion and/or scene change in a sequence of image frames. The method comprises the steps of calculating pixel value differences between values of pixels of separate image frames, the pixel values comprising color information, providing color difference values based on the calculated pixel value differences and providing an indication whether the calculated pixel value differences correspond to noise or correspond to image content based on the color difference values. Advantageous embodiments of the method are defined in the respective dependent claims.

The invention can likewise be seen in a software product comprising program information which, when executed on an information processing device, is adapted to carry out the inventive method.

### Brief description of the drawings

Fig. 1 shows a block diagram of a first embodiment of the present invention.
Fig. 2 shows a practical implementation of the present invention employed in a device for temporal domain noise reduction of a sequence of images.
Fig. 3 shows a practical implementation of a fourth embodiment of the present invention employed in a device for temporal domain noise reduction of image sequences.

### Description of the detailed embodiments

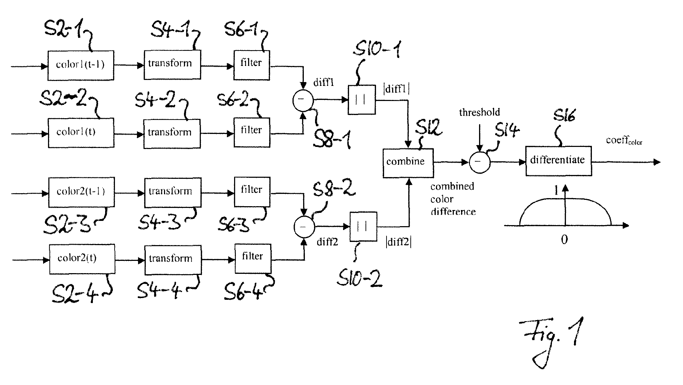

A first embodiment of the present invention is now explained with reference to the schematic block diagram of Fig. 1. All of the following processing is carried out once for every image frame of a sequence and is pixelwise, that is, the following steps are carried out for each pixel of each frame. Application to only some frames of an image sequence and to some pixels of a frame is possible however. The sequence of image frames may for example be given by the sequence of image frames comprised in a video signal or TV signal or by the sequence of images generated by a video camera but is not limited to this. Other non limiting examples are a sequence of image frames obtained by means of X-ray imaging, for example for medical purposes or for imaging or measuring purposes in scientific experiments.

In the figure, 'color1' and 'color 2' designates two color components of an image, which, for example, correspond to, but are not limited to, the U and V component of an image represented in the YUV color space. Hereby, 't' indicates a given, current image frame and 't-1' indicates the previous image frame. Thus, in step S2-2 a first color component of a current frame is provided, in step S2-1 the first color component of the previous frame is provided, in step S2-4 a second color component of the current image frame is provided and in step S2-3 the second color component of the previous image frame is provided.

In steps S4-1, S4-2, S4-3 and S4-4 these components are transformed into color components of another color space, called first transformed color component and second transformed color component in the following. This target color space and, therefore, the color space transformation may be dependent on the display device, for example a printer or monitor, by which the image sequence is to be displayed. Advantageously, this target color space is perceptibly linear, or at least more linear than the source color space. The idea of a perceptibly linear color space is to provide a description of a color by means of coordinates in a color space, which has the property that, if any one of the coordinates is varied by a given amount, a subject will always perceive the same amount of change of color, independent of which coordinate was varied and independent of what value was the original value of the coordinate. Color perception depends on many specific conditions which vary with various application scenarios and might even depend on the color perceiving subject. Therefore a perceptibly linear color space can only be linear in respect to some sort of average or prevalent color perception. A plurality of perceptibly linear color spaces do exist in practice. The CIE L*a*b* and the CIE L*u*v* color spaces are long in use and are the most frequently used linear color spaces regardless of the fact that, more recent studies have shown, that better spaces can be found. Depending on the source and target color spaces, other image components than the first and second color components might be required in order to perform the transformation. For example, in case of the input image being coded in the YUV or YCbCr color space and the target color space being the CIE L*a*b* or CIE L*u*v* color space, additionally the luminance component Y is needed (CIE stands for Commision Internationale de L'Eclairage). Transformations between color spaces are a known technique and will not be further dwelt upon.

It is to be noted, that the transformation steps S4-1 to S4-4 can be omitted in order to reduce computational complexity. In this case, the transformed color components are identical to the first and second color components. This is a resource effective implementation, for example, when the color space of the first and second color component is given by the YUV or the YCbCr color space.

In steps S6-1, S6-2, S6-3 and S6-4, the transformed color components are low pass filtered in the spatial domain. A simple low pass filter, for example a Gaussian filter, can be employed because the human visual system is not sensitive to high frequency color components and the bandwidths of the color components typically are narrow. By using such filter the noise of the image can be reduced which facilitates the differentiation between the desired image contents and the noise disturbance.
The cut-off frequency of the low-pass filter is preferably given by 0.15*f_{S}, whereby f_{S} is the sampling rate of the video signal. Values of the cut-off frequency between 0.1 * f_{S} and 0.25*f_{S} provide usable results of the low pass filtering. In many cases f_{S} is given by two times the value of the bandwidth of the video channel, which is, for example, 6 MHz in many parts of Europe (PAL television standard), 6.5 MHz in Japan (NTSC television standard) and 27 MHz for upcoming HDTV television standard. The cut-off frequency is known to denote the signal frequency for which 3dB attenuation are attained.

In step S8-1 the difference of the first transformed color component of the current video frame and the previous video frame are calculated, yielding a first color difference value, which is denoted by 'diff1' in Fig. 1. In step S8-2 the difference of the second transformed color component of the current video frame and the previous video frame are calculated, yielding a second color difference value, which is denoted by 'diff2' in Fig. 1. Each of the difference values is calculated for corresponding pixels, corresponding pixels may be located at the same image position, for example given by a horizontal position x and a vertical position y, or may be located at different image positions. Knowledge from a motion vector detection for example might give rise to corresponding pixels which are not located at the same image position, but which are shifted relative to each other as specified by a determined motion vector.

In step S10-1 and S10-2 the absolute values of the difference values obtained in steps S8-1 and S8-2 are determined.

In step S 12 the absolute values obtained in steps S10-1 and S 10-2 are combined, yielding a positive overall color difference value for each pixel. Thus, the absolute values of the two difference values corresponding to the same pixel are combined. In a simple implementation, combination can be achieved by addition of the absolute values of the difference values. A more complex implementation is given by the root of the sum of the squares of the difference values. In case that the color components were transformed in the CIE L*a*b* or L*u*v* color space, this corresponds to the CIE dE* (also called CIE DeltaE) measure of color difference, namely, the Euclidean distance between two colors expressed in the CIE L*a*b* or L*u*v* coordinates. Against intention, CIE L*a*b* and L*u*v* color spaces still exhibit some perceptible nonlinearity. There exists variants of the dE*, including for example CIE dE₉₄, also referred to as CIE94, CIE dE₀₀, also referred to as CIEDE2000 and DeltaE CMC, which compensate for some non-linearity but are computationally more complex. These variants can also be employed in the present invention. Even if perceptional linearity is desired, it must not be provided in the whole color space.

In step S 14 the difference between the overall color difference value obtained in step S 12 and a threshold is calculated. For a system based on the CIE standards, the threshold may be given by the perceivable color distance defined by the CIE. For a system not based on the CIE standards, the threshold may for example be determined from the differences of the employed color space to the CIE L*a*b* or L*u*v* color space and/or through subjective tests. It is to be noted that in case that the the color space transformation is omitted (or in case that the color space transformation does not require the luminance signal), this embodiment performs without requiring luminance signal information. The U and V signal components contain brightness information, therefore the threshold can be adapted through subjective tests, refering to "adapted threshold". Although the omission of luminance component may lead to a non-optimal solution, experiments show that it is acceptable for YUV and YCbCr format signal.

In step S16 the difference between the overall color difference and the threshold is applied to differentiate between the desired image contents and the noise disturbance. The differentiation is carried out softly, except for ranges of the difference where it is clear that the difference is caused by noise (denoted by 0 in the curve depicted in Fig. 1) or by image content (denoted by 1 in the curve). All other ranges will be decided between noise and image contents in a fuzzy way. The fuzzy decision between noise and image contents sometimes prefers noise, sometimes prefers image contents, dependent on the comparison result between the measure of color difference and the threshold. One reason for this fuzzy way of decision taking is that the noise level can not be estimated free of tolerance. The decision result is denoted as coeff_{color} and varies between 0 and 1. coeff_{color} assumes the value 0 in case that the overall color difference value is most likely due to noise, that is, in case of a very small overall color difference value. coeff_{color} takes the value of 1 in case that the overall color difference value is most likely due to image content, that it, in case of a very large overall color difference value. Whereby 'large' and 'small' must be seen as relative to the threshold value. In case that the decision can not be clearly taken, that is for intermediate values of the overall color difference value, a value in between 0 and 1 is selected for coeff_{color}, whereby a relatively high value of coeff_{color} corresponds to a relatively high value of the overall color difference value. It is to be noted, that the way the differentiation is performed does not depend on the image material. A look-up-table which maps the overall color difference value to values of coeff_{color} can be employed to implement the above teachings. Thus, step S 14 can be omitted. This also holds for other implementations, which are not based on a look-up-table. Another possibility to implement the above teachings is by means of fuzzy logic. That is, the overall color difference value is mapped to values of coeff_{color} based on the principles of fuzzy logic.

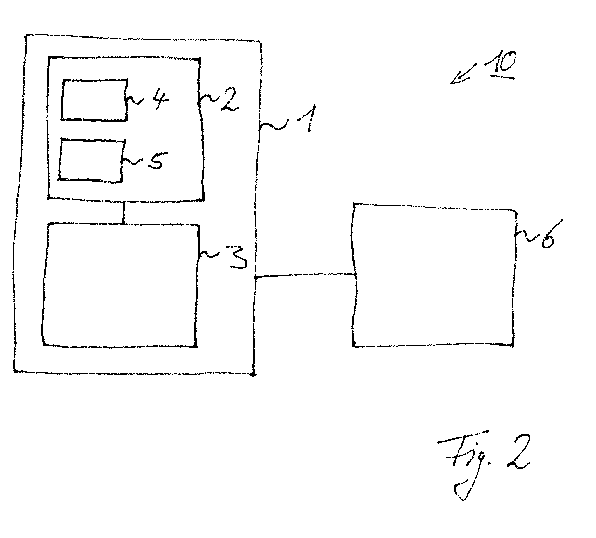

A practical implementation of the method of the present invention as explained above is now explained in relation to Fig. 2, which shows a device 1 for detecting motion and/or scene change in a sequence of image frames and an adaptive filter 6. The device 1 comprises a difference generator 2 adapted to calculate pixel value differences between values of pixels of separate image frames, the pixel values comprising color information, and adapted to provide color difference values based on the calculated pixel value differences and a discriminator 3 for providing an indication whether the calculated pixel value differences correspond to noise or correspond to image content based on the color difference values. In the application case depicted in Fig. 2 the indication is passed on from the device 1 to the adaptive filter 6, which is adapted to filter the image frames in the temporal domain based on the indication. The combination of the device 1 with the adaptive filter 6 is a device 10 for temporal domain noise reduction of a sequence of images. The adaptive filter 6 may for example be a recursive filter. The difference generator 2 comprises a low pass filter 4 for filtering the pixel values and a coordinate transformation device 5 adapted to transform pixel value information from a representation in a first color space to a representation in a second color space. The difference generator 2 and the discriminator 3 are adapted to perform the method of the first embodiment. The filter strength of the adaptive filter 6 is relatively strong, that is, a relatively high noise reduction effect is envisaged, for a relatively high probability, that the overall color difference value obtained in step S12 is due to noise. Put differently, filtering is relatively weak, that is, a relatively low noise reduction effect is achieved, for a relatively high probability that the overall color difference value obtained in step S12 is due to image content.

In order to provide a further enhanced method detecting motion and/or scene change, the information of a brightness or overall intensity signal, such as for example the luminance signal Y of the YUV color space, can be taken into account in providing the decision result of the differentiation between image content and noise. This can be achieved at different positions, for example, during the combination step S10, after the combination step S10 but before the differentiation step S16, during the differentiation step S16 and after the differentiation step S16 but before the filtering step S18. Examples for this are given in the following second to fourth embodiments. Each of the second to fourth embodiments provides all features of the first embodiment, the description of these features is omitted.

In the second embodiment a difference value corresponding to the color difference values of steps S8-1 and S8-2 is additionally calculated for the brightness signal. From this brightness difference value the absolute value is taken and is then combined in step S12 with the two other difference values to an overall color difference value. Here again simple addition or the variants of the dE*, including the root of the sums of the squares of the brightness difference value and the color difference values, can be employed for example.

In a practical implementation of this second embodiment, the difference generator 2 is adapted to calculate the brightness difference value and the absolute value of the brightness difference value and to combine the two color difference values and the brightness difference value to an overall color difference value.

In the third embodiment a difference value corresponding to the color difference values of steps S8-1 and S8-2 is additionally calculated for the brightness and the overall color difference value obtained in step S12 is weighted with the absolute value of this brightness difference value. This is motivated as follows. If the brightness difference between two temporally neighboring pixels is large, the possibility of motion or scene change is also large. Such brightness difference value is used to weight the overall color difference value between two temporally neighboring pixels. If the brightness difference value is large, the color difference value will be magnified, if the brightness difference is small, the overall color difference value will be attenuated. Thus, in the following differentiation step the decision is biased towards image content or towards noise, respectively. In a similar manner of weighting the color difference value by means of the brightness difference value, it is also possible to weight the brightness difference value by means of the overall color difference value. In this case, the weighted brightness difference value replaces the (weighted) overall color difference, so that step S16 is based on the weighted brightness difference value.

In a practical implementation of this third embodiment, the difference generator 2 is adapted to calculate the brightness difference value, the absolute value of the brightness difference value and is further adapted to either weight the overall color difference value with the absolute value of the brightness difference value or to weight the absolute value of the brightness difference value with the overall color difference.

In the fourth embodiment the decision result coeff_{color} of step S16 is combined with a corresponding result coeff_{bright} obtained from a differentiation between noise and image content based on brightness information, to form an overall motion and/or scene change detection result. Such combination, can for example be obtained by multiplying coeff_{color} with coeff_{bright·}

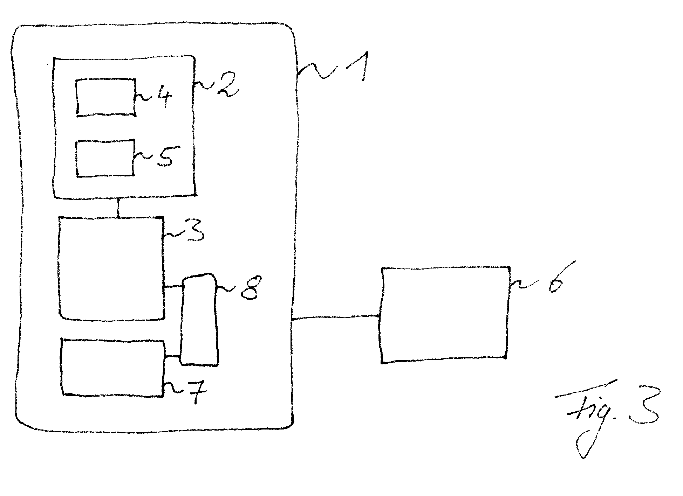

A practical implementation of this embodiment is depicted in Fig. 3. Elements of Fig. 2 and Fig. 3 which have the same reference number are the same and the description thereof will be omitted. In this embodiment the device for detecting motion and/or scene change additionally comprises a motion detector 7 which provides the value of coeff_{bright}. The device further comprises a combinator 8 adapted to provide the overall motion and/or scene detection result, by combining the values of coeff_{bright} and coeff_{color}.

The difference generator 2, the discriminator 3, the filter 4, the coordinate transformation device 5, the adaptive filter 6, the motion detector 7 and the combinator 8 may, for example, be implemented by software, for example on a programmable DSP processor or on general purpose processors, by dedicated or hardwired discrete or integrated circuitry or by combinations thereof. The components 2 to 8 may share resources (e.g. general purpose, frame memory, buses) and may share various intermediate computing results (e.g. pixel value differences).

While the YUV, YCbCr, CIE L*a*b* and CIE L*u*v* color spaces were given in the embodiments as examples, the present invention can also be implemented with other color spaces, including for example RGB, HSV, HSL and HSB color spaces. Although the present invention has been explained with reference to specific embodiments, this is by way of illustration only and it will be readily apparent to those skilled in the art that various modifications may be made therein without departing from the scope of the following claims.

## Claims

1. A device for detecting motion and/or scene change in a sequence of image frames comprising
a difference generator adapted to calculate pixel value differences between values of pixels of separate image frames, the pixel values comprising color information, and to provide color difference values based on the calculated pixel value differences and
a discriminator for providing an indication whether the calculated pixel value differences correspond to noise or correspond to image content based on the color difference values.

2. A device for detecting motion and/or scene change in a sequence of image frames according to claim 1 wherein
the indication comprises at least one indication value which is chosen from on more than two ordered values, whereby a first extreme value has the meaning that a calculated pixel value difference is most likely due to noise, a second extreme value has the meaning that a calculated pixel value difference is most likely due to image content and the value or the values in between the extreme values have a meaning in between the meanings of the extreme values.

3. A device for detecting motion and/or scene change in a sequence of image frames according to claim 1 or 2 wherein
the indication comprises at least one indication value which is chosen from more than two ordered values, whereby a relatively high value is chosen for a relatively high absolute value of a color difference value or a relatively low value is chosen for a for a relatively high value of a color difference value.

4. A device for detecting motion and/or scene change in a sequence of image frames according to claim 1, 2 or 3 wherein
the difference generator is adapted to calculate pixel value differences of a first kind between pixel values comprising a first kind of color information, calculate pixel value differences of a second kind between pixel values comprising a different, second kind of color information and calculate combined difference values, whereby a combined difference value is a scalar combination of a pixel value difference of the first kind and a pixel value difference of the second kind and whereby the color difference values are given by the combined difference values.

5. A device for detecting motion and/or scene change in a sequence of image frames according to any one of the above claims wherein
the difference generator comprises a low-pass filter for filtering the pixel values.

6. A device for detecting motion and/or scene change in a sequence of image frames according to claim 5, wherein
the low-pass filter is adapted to filter the pixel values in the spatial domain.

7. A device for detecting motion and/or scene change in a sequence of image frames according claim 5 or 6 wherein
the ratio between the cutoff frequency of the low-pass filter and the sampling rate of a video signal comprising the image frames is in the range 0.1 to 0.25.

8. A device for detecting motion and/or scene change in a sequence of image frames according to any one of the above claims wherein
the pixel values correspond to values of coordinates of a perceptibly linear color space.

9. A device for detecting motion and/or scene change in a sequence of image frames according to claim 8 wherein
the difference generator comprises a coordinate transformation device adapted to transform pixel value information from a representation in a first color space to a representation in a second color space.

10. A device for detecting motion and/or scene change in a sequence of image frames according to any one of the above claims wherein
the discriminator is adapted to provide the indication based on the color constancy principle.

11. A device for detecting motion and/or scene change in a sequence of image frames according to any one of the above claims wherein
the difference generator is adapted to calculate brightness difference values, the brightness difference values being differences between values of pixels of separate image frames, the pixel values comprising brightness information, wherein the discriminator is adapted to provide the indication based on the brightness information.

12. A device for detecting motion and/or scene change in a sequence of image frames according to claim 11 wherein
the difference generator is adapted to weight the color difference values with corresponding brightness difference values, whereby the discriminator is adapted to provide the indication based on the weighted color difference values,
or
the difference generator is adapted to weight the brightness difference values with corresponding color difference values, whereby the discriminator is adapted to provide the indication based on the weighted brightness differences.

13. A method to detect motion and/or scene change in a sequence of image frames comprising the steps of
calculating pixel value differences between values of pixels of separate image frames, the pixel values comprising color information,
providing color difference values based on the calculated pixel value differences and
providing an indication whether the calculated pixel value differences correspond to noise or correspond to image content based on the color difference values.

14. A method to detect motion and/or scene change in a sequence of image frames according to claim 13 wherein
the indication comprises at least one indication value which is chosen from more than two ordered values, whereby a first extreme value has the meaning that a calculatedpixel value difference is most likely due to noise, a second extreme value has the meaning that a calculated pixel value difference is most likely due to image content and the value or the values in between the extreme values have a meaning in between the meanings of the extreme values.

15. A method to detect motion and/or scene change in a sequence of image frames according to claim 13 or 14 wherein
the indication comprises at least one indication value which is chosen from more than two ordered values, whereby a relatively high value is chosen for a relatively high absolute value of a color difference value or a relatively low value is chosen for a for a relatively high value of a color difference value.

16. A method to detect motion and/or scene change in a sequence of image frames according to claim 13, 14 or 15 wherein
in the step of calculating pixel value differences, pixel value differences of a first kind between pixel values comprising a first kind of color information and pixel value differences of a second kind between pixel values comprising a different, second kind of color information are calculated and wherein, in the step of providing color difference values, combined difference values are calculated, whereby a combined difference value is a scalar combination of a pixel value difference of the first kind and a pixel value difference of the second kind and whereby the color difference values are given by the combined difference values.

17. A method to detect motion and/or scene change in a sequence of image frames according to any one of the claims 13 to 16 comprising a step of
filtering the pixel values with a low-pass filter.

18. A method to detect motion and/or scene change in a sequence of image frames according to claim 17 wherein
filtering is performed in the spatial domain.

19. A method to detect motion and/or scene change in a sequence of image frames according to claim 17 or 18 wherein
the ratio between the cutoff frequency of the low-pass filter and the sampling rate of a video signal comprising the image frames is in the range 0.1 to 0.25.

20. A method to detect motion and/or scene change in a sequence of image frames according to any one of the claims 13 to 19 wherein
the pixel values correspond to values of coordinates of a perceptibly linear color space.

21. A method to detect motion and/or scene change in a sequence of image frames according to any one of the claims 13 to 20 wherein
the step of providing an indication is based on the color constancy principle.

22. A method to detect motion and/or scene change in a sequence of image frames according to any one of the above claims 13 to 21 comprising a step of
calculating brightness difference values, the brightness difference values being differences between values of pixels of separate image frames, the pixel values comprising brightness information, wherein the step of providing an indication is based on the brightness difference values.

23. A method to detect motion and/or scene change in a sequence of image frames according claim 22 comprising a step of
weighting color difference values with corresponding brightness difference values, whereby the step of providing an indication is based on the weighted color difference values
or a step of
weighting brightness difference values with corresponding color difference values, whereby the step of providing an indication is based on the weighted brightness difference values.

24. A software product comprising program information which, when executed on an information processing device, is adapted to carry out the method of any one of the claims 13 to 23.
